# FASCICULE DE BREVET EUROPEEN

(11) **EP 0 695 957 B1**
(45) Date de publication et mention de la délivrance du brevet: **09.01.2002**
(21) Numéro de dépôt: 95401807.3
(22) Date de dépôt: 01.08.1995
(51) Int. Cl.: G02B 6/16, G02B 6/124, G02B 6/293, G02B 5/18

(54) **Procédés pour modifier la distribution longitudinale de pas d'un réseau diffractant inscrit dans un guide optique**
Verfahren zur Veränderung der logitudinalen Verteilung der Gitterperiode eines in einen optischen Wellenleiter geschriebenen refraktiven Gitters
Methods to modify the longitudinal distribution of the pitch of a refracting grating written in an optical waveguide

(30) Priorité: 04.08.1994 FR 9409705
(43) Date de publication de la demande: 07.02.1996
(73) Titulaire: ALCATEL, 75382 Paris (FR)
(72) Inventeur: Guillon, Jean, F-91590 La Ferte Alais (FR); Sansonetti, Pierre, F-91120 Palaiseau (FR); Macia, David, F-75018 Paris (FR); Riant, Isabelle, F-91120 Palaiseau (FR)
(74) Mandataire: Fournier, Michel Robert Marie

(56) Documents cités:
- WO-A-86/01303
- US-A- 4 474 427
- US-A- 4 636 031
- US-A- 5 321 257
- ELECTRONICS LETTERS., vol.30, no.14, 7 Juillet 1994, ENAGE GB pages 1172 - 1174 P.C.HILL 'Strain gradient chirp of fibre Bragg gratings'
- IEEE PHOTONICS TECHNOLOGY LETTERS, vol.6, no.7, Juillet 1994, NEW YORK US pages 839 - 841 Q.ZHANG ET.AL. 'Tuning Bragg wavelength by writing gratings on prestrained fibers'

## Description

La présente invention concerne des procédés permettant de modifier la distribution longitudinale de pas d'un réseau diffractant inscrit dans un guide optique, tel qu'une fibre optique, ce réseau constituant typiquement un réflecteur de Bragg. Dans un tel cadre, elle trouve application lorsque le pas du réseau doit varier le long du guide selon une loi prédeterminée.

Un réseau ainsi réalisé est dit à pas variable, un réseau dont le pas est le même sur toute sa longueur étant dit à pas constant. Un réseau dont le déphasage optique est identique pour tous les pas est dit à déphasage constant. Dans le cadre d'un système de transmission d'information à fibres optiques, la variation du pas peut être souhaitée pour conférer au réseau soit une bande spectrale élargie, soit une dispersion spectrale adaptée à un besoin particulier tel que la compensation de la dispersion chromatique d'une fibre de ligne.

Selon la présente invention le réseau peut être inscrit dans la fibre avec un pas initial constant et ce pas peut ensuite être modifié localement pour obtenir un pas final variable souhaité. Une modification du pas peut cependant également être utile pour corriger des variations parasites de pas qui peuvent se produire le long d'un réseau lors de l'inscription de celui-ci dans une fibre, par exemple lorsque on souhaite réaliser un réseau à déphasage constant. L'inscription du réseau résulte typiquement alors déphasage d'un effet photoréfractif qui est réalisé par l'interférence de deux faisceaux lumineux ultraviolets. Les variations parasites de pas résultent par exemple d'une répartition gaussienne de l'intensité lumineuse dans les faisceaux d'inscription.

Les différents modes d'inscription possibles par effet photoréfractif sont décrits dans un article "Photoinduced Bragg Gratings in Optical Fibers" de W.Morey, G.A.Bail, G.Meltz dans Optics & Photonics News, Février 1994, pp 8-14. Un autre mode utilisant un miroir est décrit dans "Réalisation d'un filtre de Bragg photoinscrit dans une fibre optique à l'aide d'un montage interféromètrique constitué d'un miroir unique" de I.Riant, P.sansonetti, H. Février, S.Artigaud, 13èmes Journées Nationales d'optique Guidée; 1993.

Un premier procédé connu pour modifier le pas d'un réseau inscrit dans une fibre optique consiste à soumettre cette fibre à une traction qui allonge la fibre élastiquement et augmente ainsi le pas du réseau. Tous les intervalles entre éléments diffractants successifs sont alors augmentés dans une même proportion de sorte que, si le pas initial était constant fixe, le pas final obtenu par ce procédé est lui aussi constant.

Un deuxième procédé connu est utilisé pour inscrire directement un réseau à pas variable dans une fibre par effet photoréfractif. La variation du pas du réseau résulte d'une variation de la largeur des franges d'interférences le long du guide. Ce deuxième procédé est décrit dans 'Fibre dispersion Compensation using a chirped in fibre Bragg Grating" de J. Williams, I. Barnian, K. Sydent, N.J. Drau, Elect.lett, 1994, vol.30, N°12, pp 985-987. Un troisième procédé connu a été proposé pour atteindre le même but à l'aide d'un système de franges d'interférence de largeur constante. Un guide optique dans lequel le réseau doit être inscrit est porté sur une ligne incurvée d'un support de sorte que l'inclinaison des rayons lumineux par rapport à l'axe du guide varie sur la longueur du guide. Ce troisième procédé connu est décrit dans le document de brevet WO-A-86 01303 (United Technologies).

Il est également décrit dans le cas d'une fibre optique dans l'article "Chirped gratings produced in photosensitive optical fibres by fibre deformation during exposure, Elect.lett, 1994, vol.30, N°5, pp 440-442

Un quatrième procédé connu est décrit dans le document US-A-4 474 427 - (Hill et al.). Ce document enseigne d'une part comment réaliser une variation temporelle de pas d'un réseau inscrit dans une fibre optique. Cette variation est obtenue par mise de cette fibre sous tension mécanique. Il enseigne d'autre part comment réaliser une variation longitudinale de ce pas par variation longitudinale de cette tension : la fibre est enroulée pour cela sur un mandrin conique.

Un cinquième procédé connu est décrit dans le document Electronics letters vol.30, n°14, 7 Juillet 1994, pages 1172-1174 - P.C. Hill "Strain gradient chirp of fibre Bragg gratings" pour engendrer une déformation locale longitudinalement variable d'une fibre optique, la fibre est fixée à un élément auxiliaire filiforme au moyen d'une colle fluable, une force de tension est appliquée à une extrémité de l'élément filiforme, et cette tension est reprise d'une façon longitudinalement progressive par la colle qui flue sous la tension.

La présente invention a notamment pour buts de permettre d'une manière simple :
- de modifier dans une proportion longitudinalement variable la distribution longitudinale de pas entre les éléments diffractants d'un réseau existant,
- de réaliser un réseau à pas variable,
- et/ou de permettre de choisir à volonté la loi de variation longitudinale du pas ou de la proportion de la modification temporelle de ce dernier,
- tout ceci notamment lorsque le réseau en question est ou doit être inclus dans une fibre optique.

Dans ces buts elle a notamment pour objet un premier procédé tel que défini à la revendication 1, ainsi qu'un second procédé tel que défini à la revendication 3.

A l'aide des figures schématiques ci-jointes, on va décrire plus particulièrement ci-après, à titre d'exemple non limitatif, comment la présente invention peut être mise en oeuvre. Lorsqu'un même élément est représenté sur plusieurs figures il y est désigné par le même signe de référence.

Les figures 1 à 4 représentent les étapes successives d'un premier mode de mise en oeuvre du premier procédé selon la présente invention.

Les figures 5 et 6 représentent chacune respectivement, une étape d'un deuxième mode de mise en oeuvre du premier procédé, et une étape d'un mode de mise en oeuvre du second procédé selon l'invention.

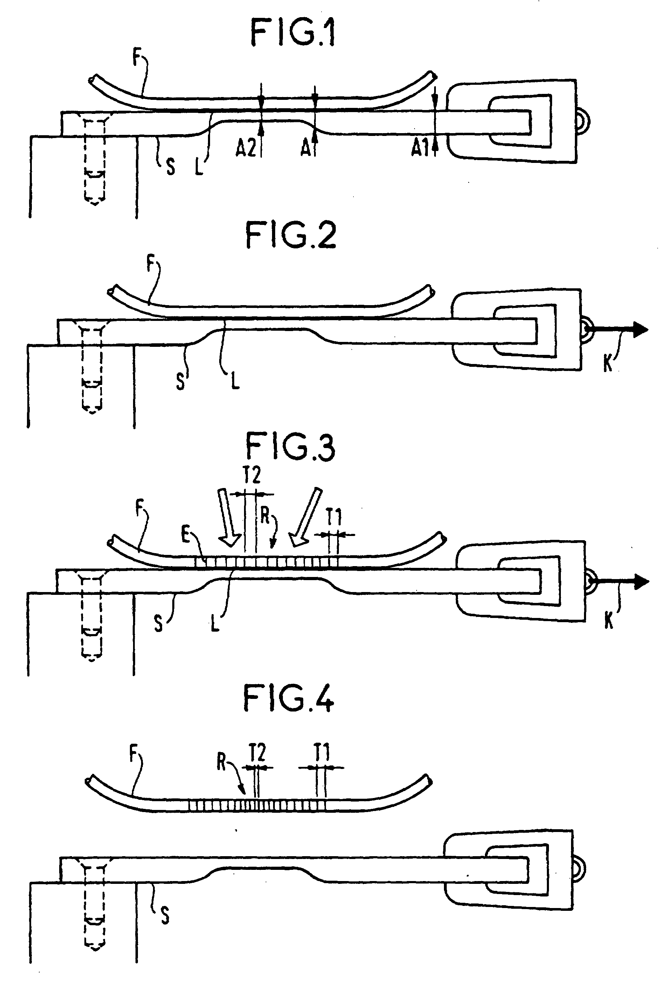

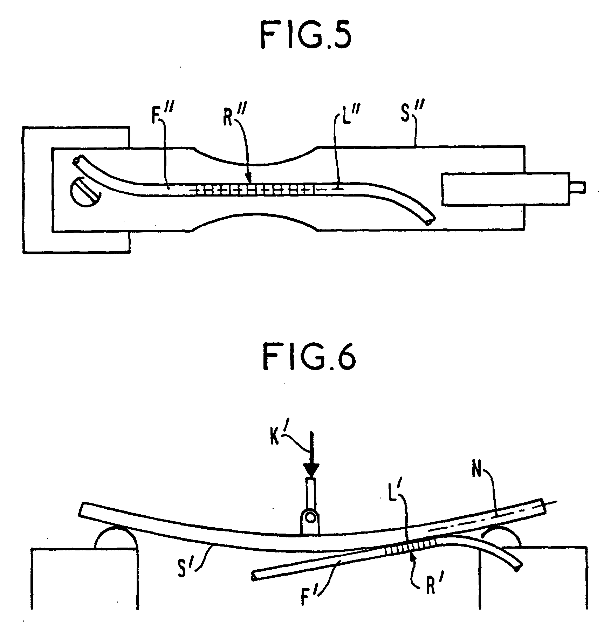

Les éléments représentés aux figures 5 et 6 correspondent un à un quant à leurs fonctions à des éléments représentés aux figures 1 à 4. Chaque élément de la figure 5 ou de la figure 6 porte la même lettre de référence que l'élément correspondant des figures 1 à 4, avec une apostrophe en plus dans le cas de la figure 6, la fibre F' de la figure 6 correspondant par exemple à la fibre F des figures 1 à 4, et avec deux apostrophes en plus dans le cas de la figure 5, le support S" de la figure 5 correspondant par exemple au support S des figures 1 à 4 et au support S' de la figure 6.

Conformément tout d'abord à chacun des différents modes d'exécution selon les différentes figures 1 à 6, la présente invention permet de modifier la distribution de pas d'un réseau diffractant R; R'; R" inscrit dans un guide optique F, F', F", lequel est fixé à un support longiligne S, S', S" le long d'une ligne L, L', L" constituant une ligne porteuse cette ligne porteuse L, L', L" peut être subdivisée par la pensée en une pluralité de segments élémentaires successifs de longueur l. Les éléments diffractants E de ce réseau se succédent le long de cette ligne porteuse L, L', L" et ils sont solidaires de ce support. De même que dans le cadre du premier procédé connu précédemment mentionné, une déformation modificatrice d'intervalles est imposée à ce support S,S',S'' pour entraîner des variations dans les longueurs l desdits segments élémentaires constitutifs de cette ligne porteuse. Un coefficient d'allongement dl/l d'un segment élémentaire donné peut alors être défini comme étant égal à la valeur algèbrique de la variation relative de la longueur l d'un tel segment c'est-à-dire le rapport entre la variation dl d'une telle longueur et cette longueur 1. Une diminution de longueur est considérée comme étant une variation de signe algèbrique négatif de sorte qu'un coefficient d'allongement négatif correspond à une contraction. Ce coefficient d'allongement est imposé par les valeurs de paramètres déterminants concernant ce support et cette déformation. De tels paramètres concernant le support sont ses formes et ses dimensions et les caractéristiques mécaniques des matériaux qui le constituent. De tels paramètres concernant la déformation définissent cette déformation soit directement c'est-à-dire géométriquement, soit mécaniquement par l'intermédiaire des forces qui la provoquent. Compte-tenu de la solidarité entre les éléments diffractants et le support, la déformation de ce dernier modifie les intervalles entre ces éléments proportionnellement au coefficient d'allongement. Dans le premier procédé connu mentionné ci-dessus les paramètres déterminants sont la section de la fibre qui porte le réseau, les caractéristiques mécaniques de la silice qui constitue cette fibre, et la force de tension appliquée à cette fibre. Selon la présente invention, on choisit pour lesdits paramètres déterminants des valeurs telles que le coefficient d'allongement varie le long de la ligne porteuse L, L', L'' grâce à quoi les différents intervalles ou pas T1, T2 entre éléments diffractants consécutifs du réseau diffractant sont modifiés dans des proportions différentes. Les valeurs des paramètres déterminants sont plus précisément choisies pour que la distribution longitudinale du pas soit modifiée dans des proportions souhaitées. De manière générale, quand ces proportions ont été définies, plusieurs choix sont possibles en ce qui concerne les paramètres déterminants. Des exemples de tels choix seront donnés ci-après.

Dans le cadre de cette invention le coefficient d'allongement ne peut pas être défini d'une manière unique sur toute la ligne porteuse. Il est défini en chaque point de cette ligne. Il est égal à la valeur algébrique de la variation relative dl/l de la longueur 1 d'un segment incluant ce point, ce segment étant suffisamment court pour que son allongement ou sa contraction soit sensiblement homogène sur toute sa longueur.

Cette invention s'applique plus particulièrement au cas où le réseau diffractant est formé dans un guide optique déformable F,F', F'', notamment dans une fibre optique. Ledit support S,S',S'' est alors constitué par une pièce auxiliaire. Cette pièce auxiliaire doit être déformable, de préférence élastiquement, avec une raideur supérieure à celle de ce guide. Ladite déformation modificatrice d'intervalles est imposée à ce support alors que ce guide est fixé solidairement à ce support le long de la ligne porteuse L, L', L".

Conformément au second procédé selon la figure 6 cette déformation peut être une flexion de ladite pièce auxiliaire S'. Compte-tenu du fait que toute flexion d'une pièce fait apparaître sur cette pièce une ligne neutre N qui ne subit aucune variation dimensionnelle longitudinale, la mise en oeuvre de la présente invention exige que la ligne porteuse L' soit choisie à distance de cette ligne neutre.

Plus spécifiquement la pièce auxiliaire S' constitue une poutre présentant une direction longitudinale sensiblement parallèle à la ligne porteuse L'. La flexion est imposée par application de forces transversales localisées telles que K' à cette poutre. Elle s'accompagne d'une contrainte qui est imposée au matériau de la poutre et qui présente une valeur et une direction variables selon la zone considérée.

La variation dudit coefficient d'allongement résulte alors du fait que la contrainte longitudinale varie le long de la ligne porteuse. Cette contrainte est constituée soit par la valeur d'une contrainte purement longitudinale, soit par celle de la composante longitudinale d'une contrainte oblique. Elle peut être de tension ou de compression. Les procédés de calcul d'une telle contrainte en chaque point sont bien connus des spécialistes de la résistance des matériaux.

Plus spécifiquement encore, dans le cas représenté à la figure 6, la poutre S' est horizontale et homogène selon sa longueur. Elle s'appuie sans encastrement à ses deux extrémités et supporte une force K' constituée par le poids d'une charge appliquée en un point de charge intermédiaire. La fibre optique F' est collée sur la surface inférieure de la poutre d'un côté de ce point. La ligne porteuse L' ainsi définie sur cette surface subit une contrainte d'extension longitudinale dont la variation longitudinale est linéaire. La variation du pas du réseau R' est alors elle aussi linéaire si le pas initial, avant collage de la fibre à la poutre, était constant.

L'amplitude de cette variation peut être choisie par sélection, éventuellement variable dans le temps, de la force K'.

Cette configuration permet de plus, par déplacement de la poutre et donc du réseau par rapport aux appuis et au point où s'exerce la force K', de régler indépendamment la longueur d'onde centrale du réseau et le gradient de variation linéaire du pas.

Conformément au premier procédé selon les Fig.1 à 5, la pièce auxiliaire a la forme d'un barreau S, S'' présentant une longueur sensiblement parallèle à ladite ligne porteuse L, L". La déformation modificatrice d'intervalles est alors une modification de cette longueur sous l'effet d'une traction longitudinale K appliquée entre les deux extrémités de ce barreau. La composition de ce barreau est avantageusement constante, seule sa section transversale A étant variable sur la longueur de la ligne porteuse. La figure montre une section d'aire maximale A1 et une section d'aire minimale A2.

Dans ce cas la force de tension ou de compression exprimée en Newtons N est constante sur la longueur du barreau. C'est la variation de la section transversale du barreau qui entraîne une variation inverse du coefficient d'allongement. Si la déformation est élastique, ce coefficient est proportionnel à la contrainte locale exprimée en Pascal (N/m²).

De manière plus générale, dans tous les cas où le matériau du support est homogène en composition et température sur la longueur de la ligne porteuse, la variation du coefficient d'allongement est obtenue par une variation de la contrainte longitudinale locale du support.

Dans le cas des figures 1 à 5 la force longitudinale appliquée au support est longitudinalement constante. La loi de variation longitudinale du pas du réseau R est alors définie par la loi de variation de la section du barreau S. L'amplitude de cette variation est cependant proportionnelle à la force de traction K et peut éventuellement être modifiée sans changer de barreau.

Dans le cas de figures 1 à 4 la variation longitudinale de la section transversale du barreau S est obtenue par variation longitudinale de son épaisseur.

Dans celui de la figure 5 la variation longitudinale de la section transversale du barreau S" est obtenue par une variation longitudinale de la largeur de ce barreau grâce à un découpage symétrique de deux bords latéraux de celui-ci. Cette dernière disposition évite toute flexion du barreau.

On constate donc que les procédés précédemment décrits comportent ainsi nécessairement au moins les deux opérations essentielles suivantes :
- Une opération de fixation (figure 1) dans laquelle le guide est fixé solidairement, par exemple mais non nécessairement par collage, à la pièce auxiliaire(s) selon la ligne porteuse (L) (figure 1); et
- Une opération de déformation (Figure 2) qui est nécessairement postérieure à l'opération de fixation. C'est au cours de cette opération de déformation que la déformation modificatrice d'intervalles est imposée à la pièce auxiliaire. Cette déformation impose des contraintes longitudinales et des modifications dimensionnelles longitudinales à cette pièce et au guide,

Les procédés précédemment décrits comportent également nécessairement une troisième opération essentielle, à savoir une opération d'inscription (Figure 3) dans laquelle le réseau diffractant(R) est formé dans le guide (F) avec un pas initial différent d'un pas final à réaliser. L'un au moins de ces deux pas varie longitudinalement.

Selon un premier mode de mise en oeuvre de l'opération d'inscription représenté aux figures 1 à 4, cette opération d'inscription (figure 3) est postérieure à l'opération de déformation (figure 2). Elle est alors suivie par une opération de libération (figure 4) qui libère le guide optique F desdites contraintes pour réaliser le pas final.

Pour effectuer cette opération de libération on relâche les forces qui ont imposé la déformation modificatrice à une pièce auxiliaire à déformation élastique et/ou, comme représenté à la figure 4, on sépare le guide F de la pièce auxiliaire S.

Selon un second mode de mise en oeuvre de l'operation d'inscription, l'opération de déformation (figure 6) est postérieure à cette opération d'inscription et réalise le pas final. Pour l'utilisation du réseau la fibre F' reste collée à la poutre S', qui reste fléchie en permanence.

Le pas initial du réseau R ou R' est par exemple longitudinalement constant et la présente invention permet de réaliser un pas variant longitudinalement selon une loi souhaitée. Cependant, dans le cas où l'opération d'inscription réalise un réseau initial présentant une variation longitudinale parasite du pas ou du déphasage, cette invention permet de réaliser un pas ou un déphasage final longitudinalement constant.

## Revendications

1. Procédé pour modifier la distribution longitudinale du pas d'un réseau diffractant (R; R") inscrit dans un guide optique déformable (F; F"), procédé selon lequel ce guide est fixé à une pièce auxiliaire longiligne (S; S") selon une ligne porteuse (L; L") s'étendant sensiblément dans la direction longitudinale de ladite pièce auxiliaire, et des forces longitudinales (K; K") sont appliquées entre les deux extrémités de cette pièce auxiliaire longiligne, un réseau de diffraction (R; R") étant par ailleurs inscrit dans ledit guide avec un pas présentant une distribution longitudinale initiale prédéterminée, différente de la distribution finale désirée, l'une au moins desdites distributions initiale ou finale présentant un pas longitudinalement variable, ce procédé étant **caractérisé par le fait que** ladite pièce auxiliaire présente une raideur non sensiblement inférieure à celle du guide et une section transversale longitudinalement variable, et **par le fait que** !a fixation du guide à la pièce auxiliaire est effectuée d'une manière suffisamment ferme pour que les déformations imposées à cette pièce par les forces appliquées soient sensiblement intégralement transférées au guide, lesdites forces longitudinales appliquées entre les deux extrémités de ladite pièce auxiliaire soumettant ainsi ledit guide, du fait de ladite section transversale longitudinalement variable de cette pièce auxiliaire, à une déformation locale également longitudinalement variable, laquelle est finalement responsable, directement ou indirectement, d'une modification correspondante de la distribution longitudinale du pas du réseau diffractant inscrit dans le guide.

2. Procédé selon la revendication 1, **caractérisé par le fait que** ladite pièce auxiliaire est un barreau, la variation longitudinale de la section transversale de ce barreau étant obtenue par une variation de la largeur de ce barreau, grâce à un découpage symmétrique des deux bords latéraux correspondants de ce barreau, ou par une variation de l'épaisseur de ce barreau.

3. Procédé pour modifier la distribution longitudinale du pas d'un réseau diffractant (R') inscrit dans un guide optique déformable (F'), procédé selon lequel ce guide est fixé à une pièce auxiliaire longiligne (S') selon une ligne porteuse (L') s'étendant sensiblement dans la direction longitudinale de ladite pièce auxiliaire, et des forces (K') sont appliquées à cette pièce auxiliaire, un réseau de diffraction (R') étant par ailleurs inscrit dans ledit guide avec un pas présentant une distribution longitudinale initiale prédéterminée, différente de la distribution finale désirée, l'une au moins desdites distributions initiale ou finale présentant un pas longitudinalement variable, ce procédé étant **caractérisé par le fait que** ladite pièce auxiliaire longiligne est constituée par une poutre présentant une raideur non sensiblement inférieure à celle du guide, **par le fait que** la fixation du guide à la poutre est effectuée d'une manière suffisamment ferme pour que les déformations imposées à cette poutre par les forces appliquées soient sensiblement intégralement transférées au guide, et **par le fait que** lesdites forces appliquées à la poutre sont des forces transversales longitudinalement décalées les unes des autres pour provoquer une flexion de cette poutre, le guide étant par ailleurs fixé à ladite poutre de façon que la ligne porteuse résultante s'écarte de la ligne neutre de cette poutre apparaissant lors de la flexion, lesdites forces de flexion soumettant ainsi ledit guide à une déformation locale longitudinalement variable, laquelle est finalement responsable, directement ou indirectement, d'une modification correspondante de la distribution longitudinale du pas du réseau diffractant inscrit dans le guide.

4. Procédé selon l'une des revendications 1 à 4, **caractérisé par le fait que** ladite pièce auxiliaire est élastiquement déformable.

5. Procédé selon l'une des revendication 1 à 5, **caractérisé par le fait que** ledit guide est une fibre optique.

6. Procédé selon l'une des revendications 1 ou 3, **caractérisé par le fait que** ladite inscription du réseau diffractant avec ledit pas présentant ladite distribution longitudinale initiale prédéterminée est effectuée antérieurement à ladite opération de déformation locale longitudinalement variable du guide, ladite déformation étant alors maintenue de manière définitive et étabissant ainsi directement ladite distribution longitudinale finale désirée concernant le pas.

7. Procédé selon l'une des revendications 1 ou 3, **caractérisé par le fait que** ladite inscription du réseau diffractant avec ledit pas présentant ladite distribution longitudinale initiale prédéterminée est effectuée aprés que le guide se trouve soumis à ladite opération de déformation locale longitudinalement variable sous l'effet des forces appliquées, ladite déformation étant ensuite relâchée de manière définitive et ledit relâchement définitif établissant ainsi ladite distribution longitudinale finale désirée concernant le pas.

## Patentansprüche

1. Verfahren zum Verändern der longitudinalen Verteilung der Gitterperiode eines in einen verformbaren optischen Wellenleiter (F; F') geschriebenen Beugungsgitters (R; R'), bei dem dieser Wellenleiter an einem langgestreckten Hilfsteil (S; S') entlang einer Trägerlinie (L; L') befestigt wird, die sich im Wesentlichen in der Längsrichtung des Hilfsteils erstreckt, und Längskräfte (K; K') zwischen den zwei Enden dieses langgestreckten Hilfsteils ausgeübt werden, ein Beugungsgitter (R; R') in den Wellenleiter mit einer Gitterperiode geschrieben wird, die eine vorgegebene Anfangs-Längsverteilung aufweist, die von der gewünschten Endverteilung verschieden ist, wobei von der Anfangsverteilung oder der Endverteilung wenigstens eine eine in Längsrichtung variable Gitterperiode aufweist, wobei das Verfahren **dadurch gekennzeichnet ist, dass** das Hilfsteil eine Steifigkeit, die nicht wesentlich kleiner ist als die des Wellenleiters, und einen in Längsrichtung variablen Querschnitt aufweist, und dass die Befestigung des Wellenleiters an dem Hilfsteil fest genug erfolgt, damit die durch die wirkenden Kräfte auf dieses Teil ausgeübten Verformungen im Wesentlichen vollständig auf den Wellenleiter übertragen werden, wobei die zwischen den zwei Enden des Hilfsteils wirkenden Längskräfte so den Wellenleiter aufgrund des in Längsrichtung variablen Querschnitts dieses Hilfsteils einer ebenfalls in Längsrichtung variablen lokalen Verformung aussetzen, die schließlich direkt oder indirekt für eine entsprechende Veränderung der Längsverteilung der Gitterperiode des in diesen Wellenleiter geschriebenen Beugungsgitters verantwortlich ist.

2. Verfahren nach Anspruch 1, **dadurch gekennzeichnet, dass** das Hilfsteil ein Stab ist, dass die longitudinale Veränderung des Querschnitts des Stabs erhalten wird durch eine Veränderung der Breite dieses Stabs durch ein symmetrisches Ausschneiden der zwei entsprechenden Seitenflächen dieses Stabes oder durch eine Veränderung der Dicke dieses Stabes.

3. Verfahren zum Verändern der longitudinalen Verteilung der Gitterperiode eines in einen verformbaren optischen Wellenleiter (F') geschriebenen Beugungsgitters (R'), bei dem dieser Wellenleiter an einem langgestreckten Hilfsteil (S') entlang einer Trägerlinie (L') befestigt wird, die sich im wesentlichen in der Längsrichtung des Hilfsteils erstreckt, und Kräfte (K') auf dieses Hilfsteil wirken, und ein Beugungsgitter (R') in den Wellenleiter mit einer Gitterperiode geschrieben wird, die eine vorgegebene Anfangs-Längsverteilung aufweist, die von der gewünschten Endverteilung verschieden ist, wobei von der Anfangsverteilung oder der Endverteilung wenigstens eine eine in Längsrichtung variable Gitterperiode aufweist, wobei das Verfahren **dadurch gekennzeichnet ist, dass** das langgestreckte Hilfsteil durch einen Träger gebildet ist, der eine nicht wesentlich kleinere Steifigkeit als die des Wellenleiters aufweist, dass die Befestigung des Wellenleiters am Träger fest genug erfolgt, damit die auf diesen Träger durch die angewendeten Kräfte ausgeübten Verformungen im wesentlichen vollständig auf den Wellenleiter übertragen werden, und dass die auf den Träger ausgeübten Kräfte in Längsrichtung gegeneinander versetzte Querkräfte zum Hervorrufen einer Biegung dieses Trägers sind, wobei der Wellenleiter außerdem an dem Träger so befestigt ist, dass die resultierende Trägerlinie sich von der neutralen Faser dieses Trägers, die bei der Biegung auftritt, entfernt, wobei die Biegungskräfte so den Wellenleiter einer in Längsrichtung variablen lokalen Verformung aussetzen, die schließlich direkt oder indirekt für eine entsprechende Veränderung der Längsverteilung der Gitterperiode des in den Wellenleiter geschriebenen Beugungsgitters verantwortlich ist.

4. Verfahren nach einem der Ansprüche 1 bis 4, **dadurch gekennzeichnet, dass** das Hilfsteil elastisch verformbar ist.

5. Verfahren nach einem der Ansprüche 1 bis 5, **dadurch gekennzeichnet, dass** der Wellenleiter eine optische Faser ist.

6. Verfahren nach einem der Ansprüche 1 bis 3, **dadurch gekennzeichnet, dass** das Schreiben des Beugungsgitters mit der vorgegebenen Gitterperioden, die die vorgegebene Anfangs-Längsverteilung aufweist, vor der Operation des in Längsrichtung variablen lokalen Verformens des Wellenleiters durchgeführt wird, wobei die Verformung dann definitiv aufrechterhalten bleibt und so direkt die gewünschte End-Längsverteilung der Gitterperiode bewirkt.

7. Verfahren nach einem der Ansprüche 1 bis 3, **dadurch gekennzeichnet, dass** das Schreiben des Beugungsgitters mit der vorgegebenen Anfangs-Längsverteilung durchgeführt wird, nachdem der Wellenleiter der Operation des in Längsrichtung variablen lokalen Verformens unter der Wirkung der angewendeten Kräfte ausgesetzt ist, wobei die Verformung anschließend definitiv frei gegeben wird und die definitive Freigabe so die gewünschte End-Längsverteilung der Gitterperiode bewirkt.

## Claims

1. A method of modifying the longitudinal distribution of the pitch of a diffraction grating (R; R") induced in a deformable optical waveguide (F; F"), in which method the waveguide is fixed to an elongate auxiliary part (S; S") along a carrier line (L; L") extending substantially in the longitudinal direction of said auxiliary part, and longitudinal forces (K; K") are applied between the two ends of said elongate auxiliary part, a diffraction grating (R; R") also being induced in said waveguide at a pitch presenting a predetermined initial longitudinal distribution different from the desired final distribution, at least one of said initial and final distributions presenting a pitch that varies longitudinally, the method being **characterized by** the fact that said auxiliary part presents stiffness that is not significantly less than that of the waveguide and presents a cross-section that varies longitudinally, and by the fact that the waveguide is fixed to the auxiliary part in a manner that is sufficiently firm for the deformation imposed on said part by the applied forces to be transferred substantially in full to the waveguide, said longitudinal forces applied between the two ends of said auxiliary part thus subjecting said waveguide to local deformation that varies longitudinally because the cross-section of said auxiliary part varies longitudinally, which deformation is finally responsible, either directly or indirectly, for a corresponding modification in the longitudinal distribution of the pitch of the diffraction grating induced in the waveguide.

2. A method according to claim 1, **characterized by** the fact that said auxiliary part is a bar with the longitudinal variation in the cross-section of said bar being obtained by varying the width of the bar by symmetrically cutting away both corresponding side edges of said bar, or by varying the thickness of the bar.

3. A method of modifying the longitudinal distribution of the pitch of a diffraction grating (R') induced in a deformable optical waveguide (F'), in which method the waveguide is fixed to an elongate auxiliary part (S') along a carrier line (L') extending substantially in the longitudinal direction of said auxiliary part, and forces (K') are applied to said auxiliary part, a diffraction grating (R') also being induced in said waveguide at a pitch presenting a predetermined initial longitudinal distribution different from the desired final distribution, at least one of said initial and final distributions presenting a pitch that varies longitudinally, the method being **characterized by** the fact that said elongate auxiliary part is constituted by a beam presenting stiffness that is not significantly less than that of the waveguide, by the fact that the waveguide is fixed to the beam in a manner that is sufficiently firm to ensure that deformation imposed on the beam by the applied forces is transferred substantially in full to the waveguide, and by the fact that said forces applied to the beam are transverse forces that are longitudinally offset from one another to cause said beam to flex, the waveguide also being fixed to said beam in such a manner that the resulting carrier line departs from the neutral axis of said beam that appears during bending, said bending forces thus subjecting said waveguide to local deformation which varies longitudinally and which is finally responsible, either directly or indirectly for a corresponding modification in the longitudinal distribution of the pitch of the diffraction grating induced in the waveguide.

4. A method according to any one of claims 1 to 3, **characterized by** the fact that the auxiliary part is elastically deformable.

5. A method according to any one of claims 1 to 4, **characterized by** the fact that said waveguide is an optical fiber.

6. A method according to claim 1 or claim 3, **characterized by** the fact that said diffraction grating is induced with said pitch presenting the predetermined initial longitudinal distribution prior to said operation of imparting longitudinally-varying local deformation to the waveguide, said deformation then being maintained in definitive manner, thereby directly establishing said desired final longitudinal distribution for pitch.

7. A method according to claim 1 or claim 3, **characterized by** the fact that said diffraction grating is induced with said pitch presenting said predetermined initial longitudinal distribution after said operation of imparting longitudinally-varying local deformation to the waveguide under the effect of the applied forces, said deformation consequently being released in definitive manner and said definitive release thus establishing said desired final longitudinal distribution concerning pitch.
